# EUROPEAN PATENT SPECIFICATION

(11) **EP 4 338 321 B1**
(45) Date of publication and mention of the grant of the patent: **27.05.2026**
(21) Application number: 22721242.0
(22) Date of filing: 23.03.2022
(51) Int. Cl.: H04B 17/27, H04W 64/00

(54) **SERVER-TO-BASE STATION CONFIGURATION OF FEATURE PROCESSING NEURAL NETWORK FOR POSITIONING**
SERVER-ZU-BASISSTATION-KONFIGURATION EINES NEURONALEN NETZES ZUR MERKMALSVERARBEITUNG ZUR POSITIONIERUNG
CONFIGURATION SERVEUR VERS STATION DE BASE DE RÉSEAU NEURONAL DE TRAITEMENT DE CARACTÉRISTIQUES POUR POSITIONNEMENT

(30) Priority: 12.05.2021 GR 20210100322
(43) Date of publication of application: 20.03.2024
(73) Proprietor: QUALCOMM Incorporated, San Diego, CA 92121-1714 (US)
(72) Inventor: GOPALAKRISHNAN, Sooryanarayanan, San Diego, California 92121-1714 (US); SUNDARARAJAN, Jay Kumar, San Diego, California 92121-1714 (US); MANOLAKOS, Alexandros, San Diego, California 92121-1714 (US); BHUSHAN, Naga, San Diego, California 92121-1714 (US); YOO, Taesang, San Diego, California 92121-1714 (US); MUKKAVILLI, Krishna Kiran, San Diego, California 92121-1714 (US); DUAN, Weimin, San Diego, California 92121-1714 (US); JI, Tingfang, San Diego, California 92121-1714 (US)
(74) Representative: Pritzlaff, Stefanie Lydia
(86) International application number: PCT/US2022/071286
(87) International publication number: WO 2022/241350

(56) References cited:
- CN-A- 109 996 168
- KR-B1- 102 036 442

## Description

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), calls for higher data transfer speeds, greater numbers of connections, and better coverage, among other improvements. The 5G standard, according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G standard. Furthermore, signaling efficiencies should be enhanced and latency should be substantially reduced compared to current standards. Attention is drawn to the document KR 102 036 442 B1. The document proposes a deep-learning-based user terminal location estimation apparatus and method for estimating a location of a user terminal having no GPS function or a GPS function not normally operating based on training information learned using deep learning. According to the document, the apparatus comprises: a first information generation unit for generating location information and first reference signal reception power of at least one first base station located in an operation area based on information on a radio signal in the operation area; a parameter acquisition unit for obtaining a parameter including a weight and bias obtained through machine learning based on the location information of a first user terminal; and a terminal location estimation unit for estimating a location of a second user terminal located in the operation area based on the location information of the first base station, the first reference signal reception power, and the parameter. Attention is also drawn to the document CN 109 996 168 A. It describes a method and a device for acquiring the position of a terminal, and the method comprises the steps: acquiring an MDT measurement report; judging whether the MDT measurement report contains latitude and longitude information or not; if the MDT measurement report contains latitude and longitude information, determining the position of the terminal according to the latitude and longitude information contained in the MDT measurement report; and if the MDT measurement report does not contain the latitude and longitude information, calling a predetermined position identification model, predicting the latitude and longitude information of the terminal, and determining the position of the terminal according to the predicted latitude and longitude information. The document states that the target of obtaining the full coverage of the terminal position can be relatively easily achieved, and the MDT measurement report generally comprises the position information, so that model creation is carried out based on the MDT measurement report.

### SUMMARY

In accordance with the present invention, a method of positioning and a network node, as set forth in the independent claims, is provided. Other embodiments of the invention are claimed in the dependent claims. The following presents a simplified summary relating to one or more aspects disclosed herein. Thus, the following summary should not be considered an extensive overview relating to all contemplated aspects, nor should the following summary be considered to identify key or critical elements relating to all contemplated aspects or to delineate the scope associated with any particular aspect. The intended limitations are defined by the claims. Accordingly, the following summary has the sole purpose to present certain concepts relating to one or more aspects relating to the mechanisms disclosed herein in a simplified form to precede the detailed description presented below.

In an aspect, a method of positioning performed by a network node includes receiving, from a network entity, one or more parameters for a neural network; performing one or more measurements of at least one reference signal from a target user equipment (UE) based on a measurement configuration for the at least one reference signal; generating one or more statistics of one or more features of the at least one reference signal based on the neural network and the one or more measurements; and reporting the one or more statistics to the network entity to enable the network entity to estimate a location of the target UE based on the one or more statistics and a location of the network node.

In an aspect, a network node includes a memory; at least one transceiver; and at least one processor communicatively coupled to the memory and the at least one transceiver, the at least one processor configured to execute the positioning method.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A and 2B illustrate example wireless network structures, according to aspects of the disclosure.
FIGS. 3A, 3B, and 3C are simplified block diagrams of several sample aspects of components that may be employed in a user equipment (UE), a base station, and a network entity, respectively, and configured to support communications as taught herein.
FIG. 4 illustrates an example neural network, according to aspects of the disclosure.
FIG. 5 is a diagram illustrating an example machine learning-based positioning formulation, according to aspects of the disclosure.
FIG. 6 is a graph representing a radio frequency (RF) channel impulse response over time, according to aspects of the disclosure.
FIG. 7 is a diagram illustrating another example machine learning-based positioning formulation, according to aspects of the disclosure.
FIG. 8 illustrates an example measurement procedure between a network node and a location server, according to aspects of the disclosure.
FIG. 9 illustrates an example method of positioning, according to aspects of the disclosure.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular radio access technology (RAT), unless otherwise noted. In general, a UE may be any wireless communication device (e.g., a mobile phone, router, tablet computer, laptop computer, consumer asset locating device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as an "access terminal" or "AT," a "client device," a "wireless device," a "subscriber device," a "subscriber terminal," a "subscriber station," a "user terminal" or "UT," a "mobile device," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on the Institute of Electrical and Electronics Engineers (IEEE) 802.11 specification, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs, including supporting data, voice, and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an uplink / reverse or downlink / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

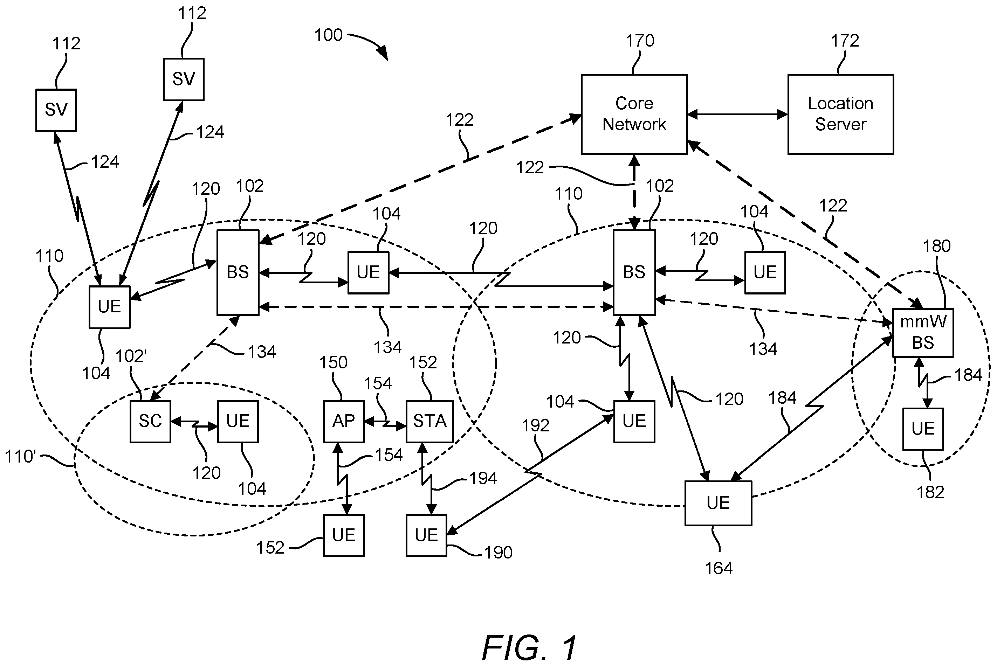

**FIG.** 1 illustrates an example wireless communications system 100, according to aspects of the disclosure. The wireless communications system 100 (which may also be referred to as a wireless wide area network (WWAN)) may include various base stations 102 (labeled "BS") and various UEs 104. The base stations 102 may include macro cell base stations (high power cellular base stations) and/or small cell base stations (low power cellular base stations). In an aspect, the macro cell base stations may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or a 5G core (5GC)) through backhaul links 122, and through the core network 170 to one or more location servers 172 (e.g., a location management function (LMF) or a secure user plane location (SUPL) location platform (SLP)). The location server(s) 172 may be part of core network 170 or may be external to core network 170. In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), an enhanced cell identifier (ECI), a virtual cell identifier (VCI), a cell global identifier (CGI), etc.) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In addition, because a TRP is typically the physical transmission point of a cell, the terms "cell" and "TRP" may be used interchangeably. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' (labeled "SC" for "small cell") may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having the same parameters, regardless of whether or not the transmitting antennas of the network node themselves are physically co-located. In NR, there are four types of quasi-co-location (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Transmit and receive beams may be spatially related. A spatial relation means that parameters for a second beam (e.g., a transmit or receive beam) for a second reference signal can be derived from information about a first beam (e.g., a receive beam or a transmit beam) for a first reference signal. For example, a UE may use a particular receive beam to receive a reference downlink reference signal (e.g., synchronization signal block (SSB)) from a base station. The UE can then form a transmit beam for sending an uplink reference signal (e.g., sounding reference signal (SRS)) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). mmW frequency bands generally include the FR2, FR3, and FR4 frequency ranges. As such, the terms "mmW" and "FR2" or "FR3" or "FR4" may generally be used interchangeably.

In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

In the example of FIG. 1, any of the illustrated UEs (shown in FIG. 1 as a single UE 104 for simplicity) may receive signals 124 from one or more Earth orbiting space vehicles (SVs) 112 (e.g., satellites). In an aspect, the SVs 112 may be part of a satellite positioning system that a UE 104 can use as an independent source of location information. A satellite positioning system typically includes a system of transmitters (e.g., SVs 112) positioned to enable receivers (e.g., UEs 104) to determine their location on or above the Earth based, at least in part, on positioning signals (e.g., signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104. A UE 104 may include one or more dedicated receivers specifically designed to receive signals 124 for deriving geo location information from the SVs 112.

In a satellite positioning system, the use of signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multifunctional Satellite Augmentation System (MSAS), the Global Positioning System (GPS) Aided Geo Augmented Navigation or GPS and Geo Augmented Navigation system (GAGAN), and/or the like. Thus, as used herein, a satellite positioning system may include any combination of one or more global and/or regional navigation satellites associated with such one or more satellite positioning systems.

In an aspect, SVs 112 may additionally or alternatively be part of one or more non-terrestrial networks (NTNs). In an NTN, an SV 112 is connected to an earth station (also referred to as a ground station, NTN gateway, or gateway), which in turn is connected to an element in a 5G network, such as a modified base station 102 (without a terrestrial antenna) or a network node in a 5GC. This element would in turn provide access to other elements in the 5G network and ultimately to entities external to the 5G network, such as Internet web servers and other user devices. In that way, a UE 104 may receive communication signals (e.g., signals 124) from an SV 112 instead of, or in addition to, communication signals from a terrestrial base station 102.

The wireless communications system 100 may further include one or more UEs, such as UE 190, that connects indirectly to one or more communication networks via one or more device-to-device (D2D) peer-to-peer (P2P) links (referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on.

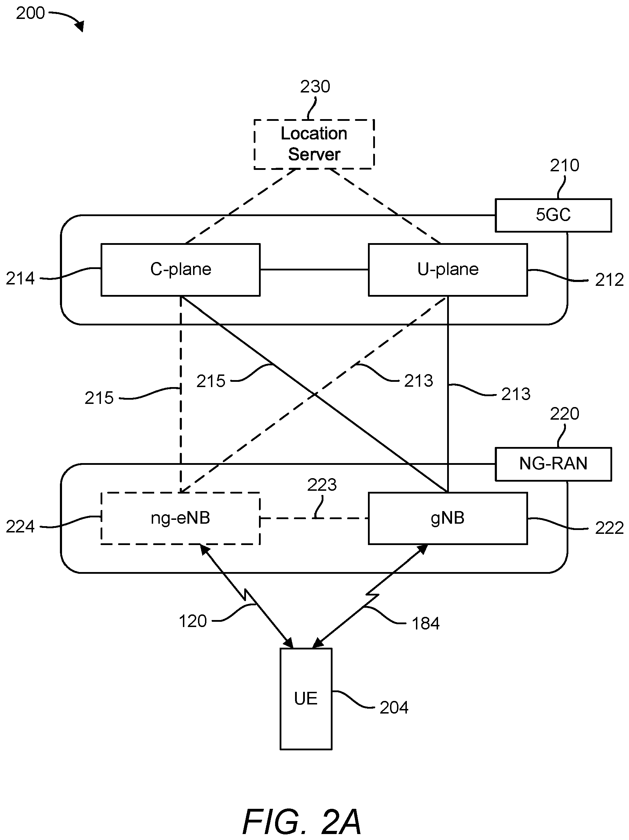

**FIG. 2A** illustrates an example wireless network structure 200. For example, a 5GC 210 (also referred to as a Next Generation Core (NGC)) can be viewed functionally as control plane (C-plane) functions 214 (e.g., UE registration, authentication, network access, gateway selection, etc.) and user plane (U-plane) functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the user plane functions 212 and control plane functions 214, respectively. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, a Next Generation RAN (NG-RAN) 220 may have one or more gNBs 222, while other configurations include one or more of both ng-eNBs 224 and gNBs 222. Either (or both) gNB 222 or ng-eNB 224 may communicate with one or more UEs 204 (e.g., any of the UEs described herein).

Another optional aspect may include a location server 230, which may be in communication with the 5GC 210 to provide location assistance for UE(s) 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network (e.g., a third party server, such as an original equipment manufacturer (OEM) server or service server).

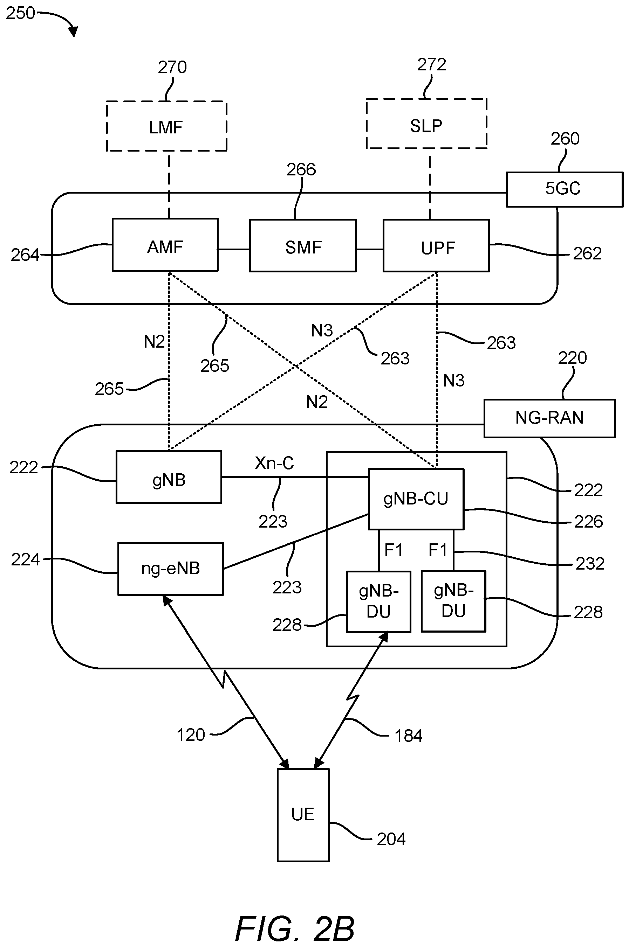

**FIG. 2B** illustrates another example wireless network structure 250. A 5GC 260 (which may correspond to 5GC 210 in FIG. 2A) can be viewed functionally as control plane functions, provided by an access and mobility management function (AMF) 264, and user plane functions, provided by a user plane function (UPF) 262, which operate cooperatively to form the core network (i.e., 5GC 260). The functions of the AMF 264 include registration management, connection management, reachability management, mobility management, lawful interception, transport for session management (SM) messages between one or more UEs 204 (e.g., any of the UEs described herein) and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the NG-RAN 220 and the LMF 270, evolved packet system (EPS) bearer identifier allocation for interworking with the EPS, and UE 204 mobility event notification. In addition, the AMF 264 also supports functionalities for non-3GPP (Third Generation Partnership Project) access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as an SLP 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, NG-RAN 220, and UEs 204 over a control plane (e.g., using interfaces and protocols intended to convey signaling messages and not voice or data), the SLP 272 may communicate with UEs 204 and external clients (not shown in FIG. 2B) over a user plane (e.g., using protocols intended to carry voice and/or data like the transmission control protocol (TCP) and/or IP).

User plane interface 263 and control plane interface 265 connect the 5GC 260, and specifically the UPF 262 and AMF 264, respectively, to one or more gNBs 222 and/or ng-eNBs 224 in the NG-RAN 220. The interface between gNB(s) 222 and/or ng-eNB(s) 224 and the AMF 264 is referred to as the "N2" interface, and the interface between gNB(s) 222 and/or ng-eNB(s) 224 and the UPF 262 is referred to as the "N3" interface. The gNB(s) 222 and/or ng-eNB(s) 224 of the NG-RAN 220 may communicate directly with each other via backhaul connections 223, referred to as the "Xn-C" interface. One or more of gNBs 222 and/or ng-eNBs 224 may communicate with one or more UEs 204 over a wireless interface, referred to as the "Uu" interface.

The functionality of a gNB 222 is divided between a gNB central unit (gNB-CU) 226 and one or more gNB distributed units (gNB-DUs) 228. The interface 232 between the gNB-CU 226 and the one or more gNB-DUs 228 is referred to as the "F1" interface. A gNB-CU 226 is a logical node that includes the base station functions of transferring user data, mobility control, radio access network sharing, positioning, session management, and the like, except for those functions allocated exclusively to the gNB-DU(s) 228. More specifically, the gNB-CU 226 hosts the radio resource control (RRC), service data adaptation protocol (SDAP), and packet data convergence protocol (PDCP) protocols of the gNB 222. A gNB-DU 228 is a logical node that hosts the radio link control (RLC), medium access control (MAC), and physical (PHY) layers of the gNB 222. Its operation is controlled by the gNB-CU 226. One gNB-DU 228 can support one or more cells, and one cell is supported by only one gNB-DU 228. Thus, a UE 204 communicates with the gNB-CU 226 via the RRC, SDAP, and PDCP layers and with a gNB-DU 228 via the RLC, MAC, and PHY layers.

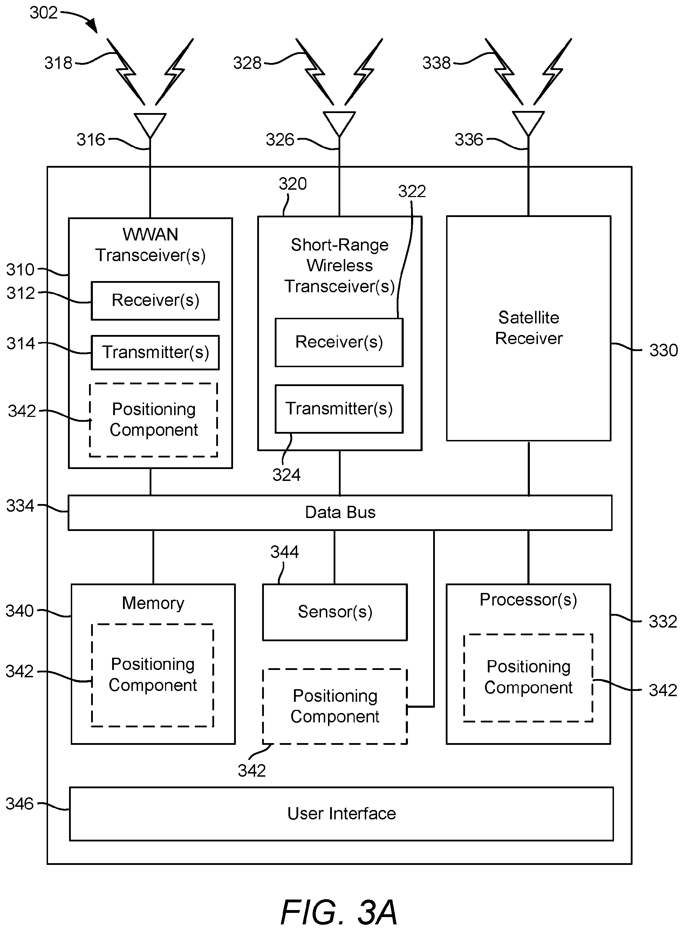

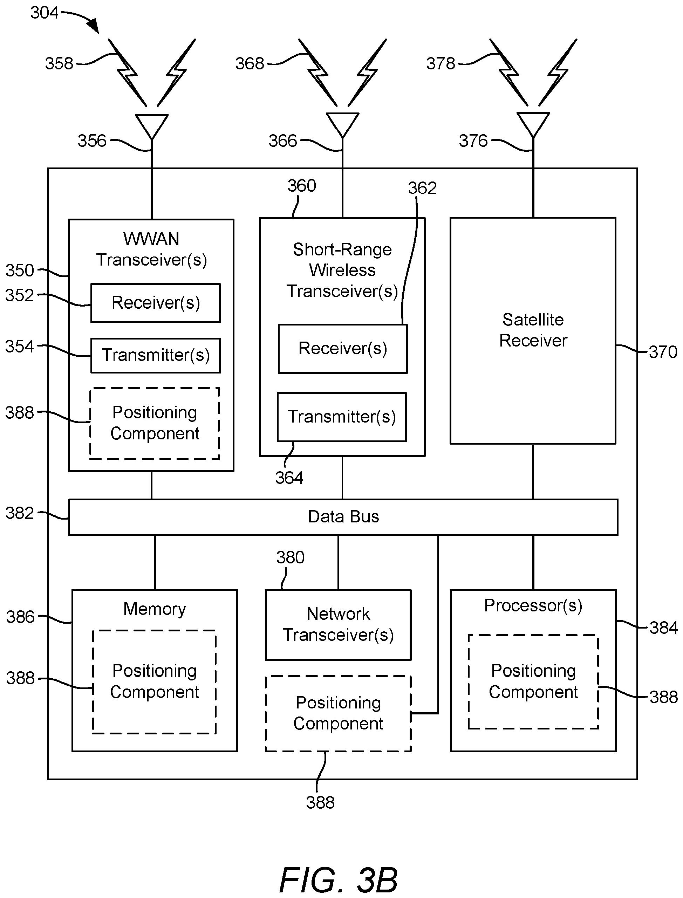

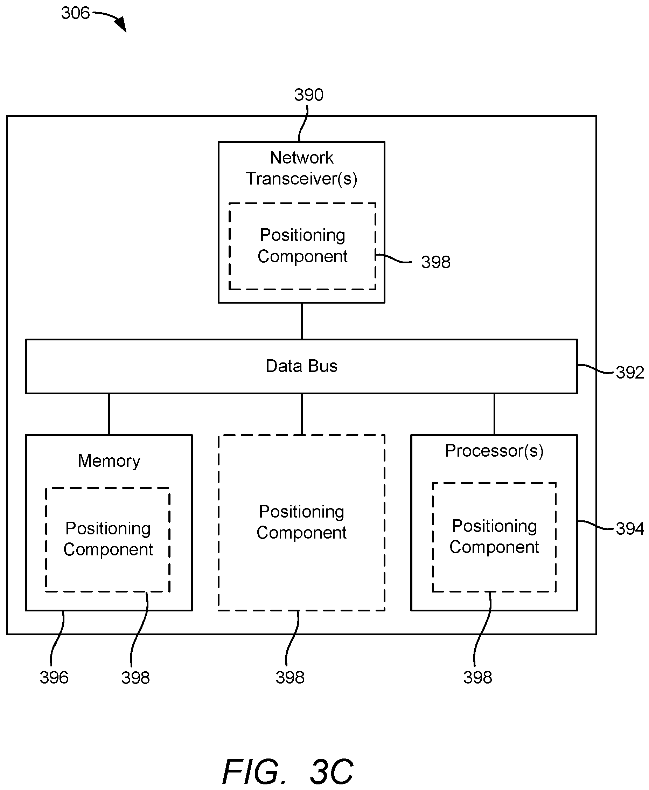

**FIGS. 3A****,** **3B****, and** **3C** illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270, or alternatively may be independent from the NG-RAN 220 and/or 5GC 210/260 infrastructure depicted in FIGS. 2A and 2B, such as a private network) to support the file transmission operations as taught herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include one or more wireless wide area network (WWAN) transceivers 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may each be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 each also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., WiFi, LTE-D, Bluetooth^{®}, Zigbee^{®}, Z-Wave^{®}, PC5, dedicated short-range communications (DSRC), wireless access for vehicular environments (WAVE), near-field communication (NFC), etc.) over a wireless communication medium of interest. The short-range wireless transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be WiFi transceivers, Bluetooth^{®} transceivers, Zigbee^{®} and/or Z-Wave^{®} transceivers, NFC transceivers, or vehicle-to-vehicle (V2V) and/or vehicle-to-everything (V2X) transceivers.

The UE 302 and the base station 304 also include, at least in some cases, satellite signal receivers 330 and 370. The satellite signal receivers 330 and 370 may be connected to one or more antennas 336 and 376, respectively, and may provide means for receiving and/or measuring satellite positioning/communication signals 338 and 378, respectively. Where the satellite signal receivers 330 and 370 are satellite positioning system receivers, the satellite positioning/communication signals 338 and 378 may be global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. Where the satellite signal receivers 330 and 370 are non-terrestrial network (NTN) receivers, the satellite positioning/communication signals 338 and 378 may be communication signals (e.g., carrying control and/or user data) originating from a 5G network. The satellite signal receivers 330 and 370 may comprise any suitable hardware and/or software for receiving and processing satellite positioning/communication signals 338 and 378, respectively. The satellite signal receivers 330 and 370 may request information and operations as appropriate from the other systems, and, at least in some cases, perform calculations to determine locations of the UE 302 and the base station 304, respectively, using measurements obtained by any suitable satellite positioning system algorithm.

The base station 304 and the network entity 306 each include one or more network transceivers 380 and 390, respectively, providing means for communicating (e.g., means for transmitting, means for receiving, etc.) with other network entities (e.g., other base stations 304, other network entities 306). For example, the base station 304 may employ the one or more network transceivers 380 to communicate with other base stations 304 or network entities 306 over one or more wired or wireless backhaul links. As another example, the network entity 306 may employ the one or more network transceivers 390 to communicate with one or more base station 304 over one or more wired or wireless backhaul links, or with other network entities 306 over one or more wired or wireless core network interfaces.

A transceiver may be configured to communicate over a wired or wireless link. A transceiver (whether a wired transceiver or a wireless transceiver) includes transmitter circuitry (e.g., transmitters 314, 324, 354, 364) and receiver circuitry (e.g., receivers 312, 322, 352, 362). A transceiver may be an integrated device (e.g., embodying transmitter circuitry and receiver circuitry in a single device) in some implementations, may comprise separate transmitter circuitry and separate receiver circuitry in some implementations, or may be embodied in other ways in other implementations. The transmitter circuitry and receiver circuitry of a wired transceiver (e.g., network transceivers 380 and 390 in some implementations) may be coupled to one or more wired network interface ports. Wireless transmitter circuitry (e.g., transmitters 314, 324, 354, 364) may include or be coupled to a plurality of antennas (e.g., antennas 316, 326, 356, 366), such as an antenna array, that permits the respective apparatus (e.g., UE 302, base station 304) to perform transmit "beamforming," as described herein. Similarly, wireless receiver circuitry (e.g., receivers 312, 322, 352, 362) may include or be coupled to a plurality of antennas (e.g., antennas 316, 326, 356, 366), such as an antenna array, that permits the respective apparatus (e.g., UE 302, base station 304) to perform receive beamforming, as described herein. In an aspect, the transmitter circuitry and receiver circuitry may share the same plurality of antennas (e.g., antennas 316, 326, 356, 366), such that the respective apparatus can only receive or transmit at a given time, not both at the same time. A wireless transceiver (e.g., WWAN transceivers 310 and 350, short-range wireless transceivers 320 and 360) may also include a network listen module (NLM) or the like for performing various measurements.

As used herein, the various wireless transceivers (e.g., transceivers 310, 320, 350, and 360, and network transceivers 380 and 390 in some implementations) and wired transceivers (e.g., network transceivers 380 and 390 in some implementations) may generally be characterized as "a transceiver," "at least one transceiver," or "one or more transceivers." As such, whether a particular transceiver is a wired or wireless transceiver may be inferred from the type of communication performed. For example, backhaul communication between network devices or servers will generally relate to signaling via a wired transceiver, whereas wireless communication between a UE (e.g., UE 302) and a base station (e.g., base station 304) will generally relate to signaling via a wireless transceiver.

The UE 302, the base station 304, and the network entity 306 also include other components that may be used in conjunction with the operations as disclosed herein. The UE 302, the base station 304, and the network entity 306 include one or more processors 332, 384, and 394, respectively, for providing functionality relating to, for example, wireless communication, and for providing other processing functionality. The processors 332, 384, and 394 may therefore provide means for processing, such as means for determining, means for calculating, means for receiving, means for transmitting, means for indicating, etc. In an aspect, the processors 332, 384, and 394 may include, for example, one or more general purpose processors, multi-core processors, central processing units (CPUs), ASICs, digital signal processors (DSPs), field programmable gate arrays (FPGAs), other programmable logic devices or processing circuitry, or various combinations thereof.

The UE 302, the base station 304, and the network entity 306 include memory circuitry implementing memories 340, 386, and 396 (e.g., each including a memory device), respectively, for maintaining information (e.g., information indicative of reserved resources, thresholds, parameters, and so on). The memories 340, 386, and 396 may therefore provide means for storing, means for retrieving, means for maintaining, etc. In some cases, the UE 302, the base station 304, and the network entity 306 may include positioning component 342, 388, and 398, respectively. The positioning component 342, 388, and 398 may be hardware circuits that are part of or coupled to the processors 332, 384, and 394, respectively, that, when executed, cause the UE 302, the base station 304, and the network entity 306 to perform the functionality described herein. In other aspects, the positioning component 342, 388, and 398 may be external to the processors 332, 384, and 394 (e.g., part of a modem processing system, integrated with another processing system, etc.). Alternatively, the positioning component 342, 388, and 398 may be memory modules stored in the memories 340, 386, and 396, respectively, that, when executed by the processors 332, 384, and 394 (or a modem processing system, another processing system, etc.), cause the UE 302, the base station 304, and the network entity 306 to perform the functionality described herein. FIG. 3A illustrates possible locations of the positioning component 342, which may be, for example, part of the one or more WWAN transceivers 310, the memory 340, the one or more processors 332, or any combination thereof, or may be a standalone component. FIG. 3B illustrates possible locations of the positioning component 388, which may be, for example, part of the one or more WWAN transceivers 350, the memory 386, the one or more processors 384, or any combination thereof, or may be a standalone component. FIG. 3C illustrates possible locations of the positioning component 398, which may be, for example, part of the one or more network transceivers 390, the memory 396, the one or more processors 394, or any combination thereof, or may be a standalone component.

The UE 302 may include one or more sensors 344 coupled to the one or more processors 332 to provide means for sensing or detecting movement and/or orientation information that is independent of motion data derived from signals received by the one or more WWAN transceivers 310, the one or more short-range wireless transceivers 320, and/or the satellite signal receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in two-dimensional (2D) and/or three-dimensional (3D) coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the one or more processors 384 in more detail, in the downlink, IP packets from the network entity 306 may be provided to the processor 384. The one or more processors 384 may implement functionality for an RRC layer, a packet data convergence protocol (PDCP) layer, a radio link control (RLC) layer, and a medium access control (MAC) layer. The one or more processors 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the one or more processors 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the one or more processors 332, which implements Layer-3 (L3) and Layer-2 (L2) functionality.

In the uplink, the one or more processors 332 provides demultiplexing between transport and logical channels, packet reassembly, deciphering, header decompression, and control signal processing to recover IP packets from the core network. The one or more processors 332 are also responsible for error detection.

Similar to the functionality described in connection with the downlink transmission by the base station 304, the one or more processors 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the one or more processors 384.

In the uplink, the one or more processors 384 provides demultiplexing between transport and logical channels, packet reassembly, deciphering, header decompression, control signal processing to recover IP packets from the UE 302. IP packets from the one or more processors 384 may be provided to the core network. The one or more processors 384 are also responsible for error detection.

For convenience, the UE 302, the base station 304, and/or the network entity 306 are shown in FIGS. 3A, 3B, and 3C as including various components that may be configured according to the various examples described herein. It will be appreciated, however, that the illustrated components may have different functionality in different designs. In particular, various components in FIGS. 3A to 3C are optional in alternative configurations and the various aspects include configurations that may vary due to design choice, costs, use of the device, or other considerations. For example, in case of FIG. 3A, a particular implementation of UE 302 may omit the WWAN transceiver(s) 310 (e.g., a wearable device or tablet computer or PC or laptop may have Wi-Fi and/or Bluetooth capability without cellular capability), or may omit the short-range wireless transceiver(s) 320 (e.g., cellular-only, etc.), or may omit the satellite signal receiver 330, or may omit the sensor(s) 344, and so on. In another example, in case of FIG. 3B, a particular implementation of the base station 304 may omit the WWAN transceiver(s) 350 (e.g., a Wi-Fi "hotspot" access point without cellular capability), or may omit the short-range wireless transceiver(s) 360 (e.g., cellular-only, etc.), or may omit the satellite receiver 370, and so on. For brevity, illustration of the various alternative configurations is not provided herein, but would be readily understandable to one skilled in the art.

The various components of the UE 302, the base station 304, and the network entity 306 may be communicatively coupled to each other over data buses 334, 382, and 392, respectively. In an aspect, the data buses 334, 382, and 392 may form, or be part of, a communication interface of the UE 302, the base station 304, and the network entity 306, respectively. For example, where different logical entities are embodied in the same device (e.g., gNB and location server functionality incorporated into the same base station 304), the data buses 334, 382, and 392 may provide communication between them.

The components of FIGS. 3A, 3B, and 3C may be implemented in various ways. In some implementations, the components of FIGS. 3A, 3B, and 3C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processors 332, 384, 394, the transceivers 310, 320, 350, and 360, the memories 340, 386, and 396, the positioning component 342, 388, and 398, etc.

In some designs, the network entity 306 may be implemented as a core network component. In other designs, the network entity 306 may be distinct from a network operator or operation of the cellular network infrastructure (e.g., NG RAN 220 and/or 5GC 210/260). For example, the network entity 306 may be a component of a private network that may be configured to communicate with the UE 302 via the base station 304 or independently from the base station 304 (e.g., over a non-cellular communication link, such as WiFi).

NR supports a number of cellular network-based positioning technologies, including downlink-based, uplink-based, and downlink-and-uplink-based positioning methods. Downlink-based positioning methods include observed time difference of arrival (OTDOA) in LTE, downlink time difference of arrival (DL-TDOA) in NR, and downlink angle-of-departure (DL-AoD) in NR. In an OTDOA or DL-TDOA positioning procedure, a UE measures the differences between the times of arrival (ToAs) of reference signals (e.g., positioning reference signals (PRS)) received from pairs of base stations, referred to as reference signal time difference (RSTD) or time difference of arrival (TDOA) measurements, and reports them to a positioning entity. More specifically, the UE receives the identifiers (IDs) of a reference base station (e.g., a serving base station) and multiple non-reference base stations in assistance data. The UE then measures the RSTD between the reference base station and each of the non-reference base stations. Based on the known locations of the involved base stations and the RSTD measurements, the positioning entity can estimate the UE's location.

For DL-AoD positioning, the positioning entity uses a beam report from the UE of received signal strength measurements of multiple downlink transmit beams to determine the angle(s) between the UE and the transmitting base station(s). The positioning entity can then estimate the location of the UE based on the determined angle(s) and the known location(s) of the transmitting base station(s).

Uplink-based positioning methods include uplink time difference of arrival (UL-TDOA) and uplink angle-of-arrival (UL-AoA). UL-TDOA is similar to DL-TDOA, but is based on uplink reference signals (e.g., sounding reference signals (SRS)) transmitted by the UE. For UL-AoA positioning, one or more base stations measure the received signal strength of one or more uplink reference signals (e.g., SRS) received from a UE on one or more uplink receive beams. The positioning entity uses the signal strength measurements and the angle(s) of the receive beam(s) to determine the angle(s) between the UE and the base station(s). Based on the determined angle(s) and the known location(s) of the base station(s), the positioning entity can then estimate the location of the UE.

Downlink-and-uplink-based positioning methods include enhanced cell-ID (E-CID) positioning and multi-round-trip-time (RTT) positioning (also referred to as "multi-cell RTT"). In an RTT procedure, an initiator (a base station or a UE) transmits an RTT measurement signal (e.g., a PRS or SRS) to a responder (a UE or base station), which transmits an RTT response signal (e.g., an SRS or PRS) back to the initiator. The RTT response signal includes the difference between the ToA of the RTT measurement signal and the transmission time of the RTT response signal, referred to as the reception-to-transmission (Rx-Tx) time difference. The initiator calculates the difference between the transmission time of the RTT measurement signal and the ToA of the RTT response signal, referred to as the transmission-to-reception (Tx-Rx) time difference. The propagation time (also referred to as the "time of flight") between the initiator and the responder can be calculated from the Tx-Rx and Rx-Tx time differences. Based on the propagation time and the known speed of light, the distance between the initiator and the responder can be determined. For multi-RTT positioning, a UE performs an RTT procedure with multiple base stations to enable its location to be determined (e.g., using multilateration) based on the known locations of the base stations. RTT and multi-RTT methods can be combined with other positioning techniques, such as UL-AoA and DL-AoD, to improve location accuracy.

The E-CID positioning method is based on radio resource management (RRM) measurements. In E-CID, the UE reports the serving cell ID, the timing advance (TA), and the identifiers, estimated timing, and signal strength of detected neighbor base stations. The location of the UE is then estimated based on this information and the known locations of the base station(s).

To assist positioning operations, a location server (e.g., location server 230, LMF 270, SLP 272) may provide assistance data to the UE. For example, the assistance data may include identifiers of the base stations (or the cells/TRPs of the base stations) from which to measure reference signals, the reference signal configuration parameters (e.g., the number of consecutive positioning subframes, periodicity of positioning subframes, muting sequence, frequency hopping sequence, reference signal identifier, reference signal bandwidth, etc.), and/or other parameters applicable to the particular positioning method. Alternatively, the assistance data may originate directly from the base stations themselves (e.g., in periodically broadcasted overhead messages, etc.). in some cases, the UE may be able to detect neighbor network nodes itself without the use of assistance data.

In the case of an OTDOA or DL-TDOA positioning procedure, the assistance data may further include an expected RSTD value and an associated uncertainty, or search window, around the expected RSTD. In some cases, the value range of the expected RSTD may be +/- 500 microseconds (µs). In some cases, when any of the resources used for the positioning measurement are in FR1, the value range for the uncertainty of the expected RSTD may be +/- 32 µs. In other cases, when all of the resources used for the positioning measurement(s) are in FR2, the value range for the uncertainty of the expected RSTD may be +/- 8 µs.

A location estimate may be referred to by other names, such as a position estimate, location, position, position fix, fix, or the like. A location estimate may be geodetic and comprise coordinates (e.g., latitude, longitude, and possibly altitude) or may be civic and comprise a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence).

Machine learning may be used to generate models that may be used to facilitate various aspects associated with processing of data. One specific application of machine learning relates to generation of measurement models for processing of reference signals for positioning (e.g., PRS), such as feature extraction, reporting of reference signal measurements (e.g., selecting which extracted features to report), and so on.

Machine learning models are generally categorized as either supervised or unsupervised. A supervised model may further be sub-categorized as either a regression or classification model. Supervised learning involves learning a function that maps an input to an output based on example input-output pairs. For example, given a training dataset with two variables of age (input) and height (output), a supervised learning model could be generated to predict the height of a person based on their age. In regression models, the output is continuous. One example of a regression model is a linear regression, which simply attempts to find a line that best fits the data. Extensions of linear regression include multiple linear regression (e.g., finding a plane of best fit) and polynomial regression (e.g., finding a curve of best fit).

Another example of a machine learning model is a decision tree model. In a decision tree model, a tree structure is defined with a plurality of nodes. Decisions are used to move from a root node at the top of the decision tree to a leaf node at the bottom of the decision tree (i.e., a node with no further child nodes). Generally, a higher number of nodes in the decision tree model is correlated with higher decision accuracy.

Another example of a machine learning model is a decision forest. Random forests are an ensemble learning technique that builds off of decision trees. Random forests involve creating multiple decision trees using bootstrapped datasets of the original data and randomly selecting a subset of variables at each step of the decision tree. The model then selects the mode of all of the predictions of each decision tree. By relying on a "majority wins" model, the risk of error from an individual tree is reduced.

Another example of a machine learning model is a neural network (NN). A neural network is essentially a network of mathematical equations. Neural networks accept one or more input variables, and by going through a network of equations, result in one or more output variables. Put another way, a neural network takes in a vector of inputs and returns a vector of outputs.

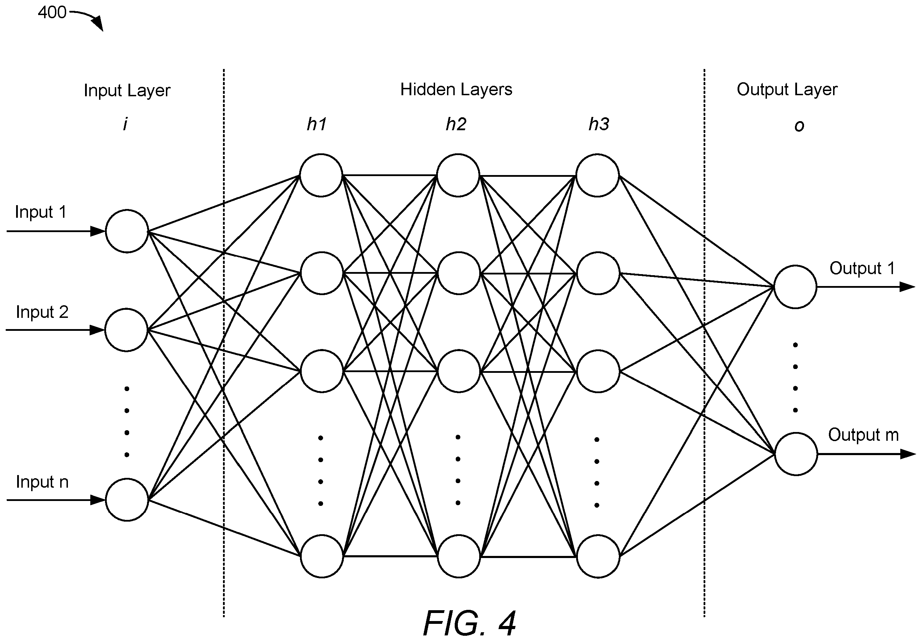

**FIG.** 4 illustrates an example neural network 400, according to aspects of the disclosure. The neural network 400 includes an input layer 'i' that receives 'n' (one or more) inputs (illustrated as "Input 1," "Input 2," and "Input n"), one or more hidden layers (illustrated as hidden layers 'h1,' 'h2,' and 'h3') for processing the inputs from the input layer, and an output layer 'o' that provides 'm' (one or more) outputs (labeled "Output 1" and "Output m"). The number of inputs 'n,' hidden layers 'h,' and outputs 'm' may be the same or different. In some designs, the hidden layers 'h' may include linear function(s) and/or activation function(s) that the nodes (illustrated as circles) of each successive hidden layer process from the nodes of the previous hidden layer.

In classification models, the output is discrete. One example of a classification model is logistic regression. Logistic regression is similar to linear regression but is used to model the probability of a finite number of outcomes, typically two. In essence, a logistic equation is created in such a way that the output values can only be between '0' and '1.' Another example of a classification model is a support vector machine. For example, for two classes of data, a support vector machine will find a hyperplane or a boundary between the two classes of data that maximizes the margin between the two classes. There are many planes that can separate the two classes, but only one plane can maximize the margin or distance between the classes. Another example of a classification model is Naïve Bayes, which is based on Bayes Theorem. Other examples of classification models include decision tree, random forest, and neural network, similar to the examples described above except that the output is discrete rather than continuous.

Unlike supervised learning, unsupervised learning is used to draw inferences and find patterns from input data without references to labeled outcomes. Two examples of unsupervised learning models include clustering and dimensionality reduction.

Clustering is an unsupervised technique that involves the grouping, or clustering, of data points. Clustering is frequently used for customer segmentation, fraud detection, and document classification. Common clustering techniques include k-means clustering, hierarchical clustering, mean shift clustering, and density-based clustering. Dimensionality reduction is the process of reducing the number of random variables under consideration by obtaining a set of principal variables. In simpler terms, dimensionality reduction is the process of reducing the dimension of a feature set (in even simpler terms, reducing the number of features). Most dimensionality reduction techniques can be categorized as either feature elimination or feature extraction. One example of dimensionality reduction is called principal component analysis (PCA). In the simplest sense, PCA involves project higher dimensional data (e.g., three dimensions) to a smaller space (e.g., two dimensions). This results in a lower dimension of data (e.g., two dimensions instead of three dimensions) while keeping all original variables in the model.

Regardless of which machine learning model is used, at a high-level, a machine learning module (e.g., implemented by a processing system, such as processors 332, 384, or 394) may be configured to iteratively analyze training input data (e.g., measurements of reference signals to/from various target UEs) and to associate this training input data with an output data set (e.g., a set of possible or likely candidate locations of the various target UEs), thereby enabling later determination of the same output data set when presented with similar input data (e.g., from other target UEs at the same or similar location).

As described above, in cellular systems, the location of a UE can be determined based on reference signals (e.g., SRS) transmitted by the UE to the gNB (e.g., for UL-AoA, RTT, and UL-TDOA positioning techniques). This requires the exchange of information between the gNB and an upstream location server (e.g., LMF 270). The gNB can estimate features such as the RTT, the TDOA, the AoA, etc., which it then reports to the location server. The location server maps these features to an estimate of the UE's location using a model based on physics and statistical techniques. It can also fuse features from multiple gNBs measuring reference signals from the UE to improve accuracy.

This approach depends on the ability to mathematically model the measurement reliability. Depending on the local conditions (such as implementation aspects, the gNBs' capability to perform the measurements, the availability of historical data, etc.), the location server may also need to tailor how much and what information the gNB should report.

The mapping from the uplink reference signal(s) to the UE's location likelihood includes several components, some of which may not be easy to model mathematically. For example, there are common models, such as a physics-based model (e.g., RTT has circular contours), and gNB-specific models, such as for gNB properties (e.g., location, downtilt, transmit power, etc.), for gNB-side implementation issues (e.g., gNB synchronization errors, clock drift, antenna to baseband delay, etc.), for base station almanac (BSA) errors, and the like. The mathematical model(s) may be limited, due, for example, the issue that measurement reliability may not be easy to model. In addition, information needed for the model(s) may be unavailable (e.g., the gNB time synchronization error).

A mechanism is needed that enables a machine learning based approach where past data is used to learn a model to map the reference signal to the likelihood of positioning features. The mechanism should allow more flexibility than selecting from a set of predefined features, so that the network can tailor the features to the specific local conditions.

The present disclosure provides techniques for the location server to configure a base station with a functional transformation in the form of a base station feature processing neural network. At a high level, the location server transmits the parameters of this neural network (i.e., the weights and biases of the neural network) to the base station. The base station can then use this neural network to process the reference signal(s) received from a UE to derive the likelihood of various positioning features.

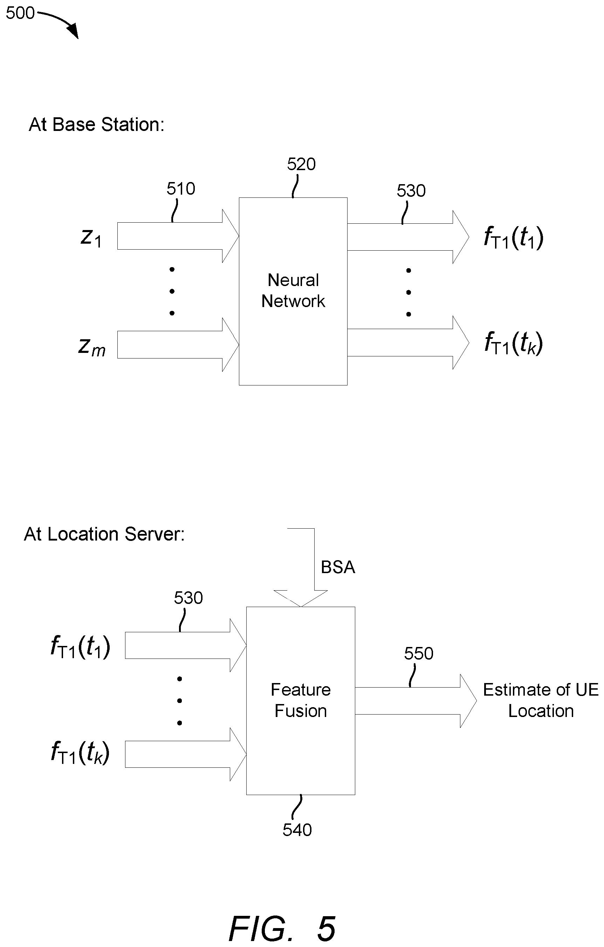

**FIG.** 5 is a diagram 500 illustrating an example machine learning-based positioning formulation, according to aspects of the disclosure. On the base station side, the base station provides 'm' (one or more) inputs 510 (illustrated as "z₁" and "zₘ") to a neural network 520. The 'm' inputs 510 may be the raw I/Q samples (also referred to as "analytic signal") representing the uplink reference signal received at the base station. Alternately, the 'm' inputs 510 may be the time-domain or frequency-domain channel estimate of the reference signal. A time-domain channel estimate may be in the form of a power-delay-angle profile. For example, a time-domain channel estimate may comprise the powers of the top 'N' channel taps for each of 'M' angles and the associated SINR, or it may alternately comprise only a subset of the full channel response. As an example of the latter, the time-domain channel estimate may be a one-dimensional power-delay profile, where the power is averaged across angles, and the SINR. As another example, it may be a one-dimensional delay profile (with no power information) and the SINR.

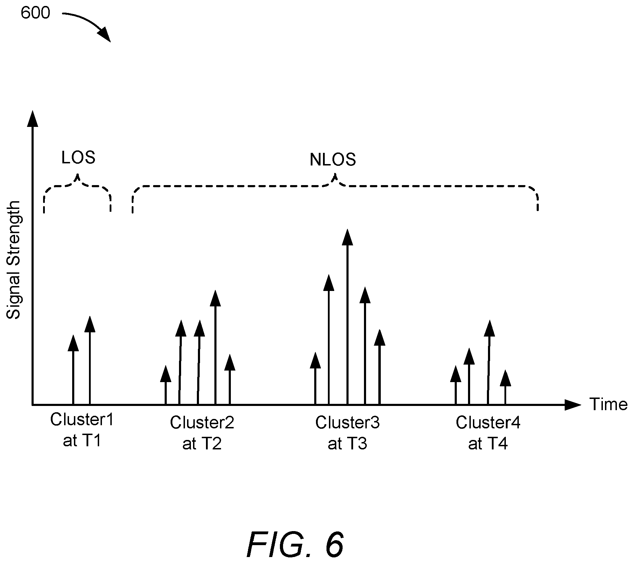

**FIG.** 6 is a graph 600 illustrating the channel estimate of a multipath channel between a receiver device (e.g., any of the UEs or base stations described herein) and a transmitter device (e.g., any other of the UEs or base stations described herein), according to aspects of the disclosure. The channel estimate represents the intensity of a radio frequency (RF) signal received through a multipath channel as a function of time delay. Thus, the horizontal axis is in units of time (e.g., milliseconds) and the vertical axis is in units of signal strength (e.g., decibels). Note that a multipath channel is a channel between a transmitter and a receiver over which an RF signal follows multiple paths, or multipaths, due to transmission of the RF signal on multiple beams and/or to the propagation characteristics of the RF signal (e.g., reflection, refraction, etc.).

In the example of FIG. 6, the receiver detects/measures multiple (four) clusters of channel taps. Each channel tap represents a multipath that an RF signal followed between the transmitter and the receiver. That is, a channel tap represents the arrival of an RF signal on a multipath. Each cluster of channel taps indicates that the corresponding multipaths followed essentially the same path. There may be different clusters due to the RF signal being transmitted on different transmit beams (and therefore at different angles), or because of the propagation characteristics of RF signals (e.g., potentially following different paths due to reflections), or both.

All of the clusters of channel taps for a given RF signal represent the multipath channel (or simply channel) between the transmitter and receiver. Under the channel illustrated in FIG. 6, the receiver receives a first cluster of two RF signals on channel taps at time 'T1,' a second cluster of five RF signals on channel taps at time 'T2,' a third cluster of five RF signals on channel taps at time 'T3,' and a fourth cluster of four RF signals on channel taps at time 'T4.' In the example of FIG. 6, because the first cluster of RF signals at time 'T1' arrives first, it is assumed to correspond to the RF signal transmitted on the transmit beam aligned with the LOS, or the shortest, path. The third cluster at time 'T3' is comprised of the strongest RF signals, and may correspond to, for example, the RF signal transmitted on a transmit beam aligned with a non-line-of-sight (NLOS) path. Note that although FIG. 6 illustrates clusters of two to five channel taps, as will be appreciated, the clusters may have more or fewer than the illustrated number of channel taps.

Referring back to FIG. 5, the neural network 520 may be a machine learning-based model that maps the 'm' inputs 510 (e.g., the I/Q samples or the time-domain or frequency-domain channel estimate of the reference signal) to feature statistics. The neural network 520 outputs statistics 530 of 'k' (one or more) positioning features. The positioning features (illustrated as '*t*₁' and '*tₖ*') may be positioning measurements that are based on the measured reference signal, such as an RTT, AoA, ToA, etc. The statistics 530 (illustrated as the function '*f*_{T1}') may be the mean, confidence interval, standard deviation, etc. of the 'k' positioning features. Alternatively, the outputted statistics 530 may represent a probability distribution of each positioning feature, for example, in the form of a mixture of Gaussians (a symmetric "bell curve" shape). The neural network 520 may output the means, covariances, and weights of the mixture components. In this case, multiple features (e.g., RTT and AoA) may also be represented as a joint probability distribution, for example, as a multi-dimensional mixture of Gaussians.

The base station may transmit the statistics 530 to the location server (LMF 270). The location server may receive statistics 530 from one or more base stations involved in a positioning session with the UE. The location server may input the statistics 530 from each base station into a feature fusion module 540, which, based on the statistics 530 and BSA information (e.g., the location of the involved base station(s)), determines the location of the UE.

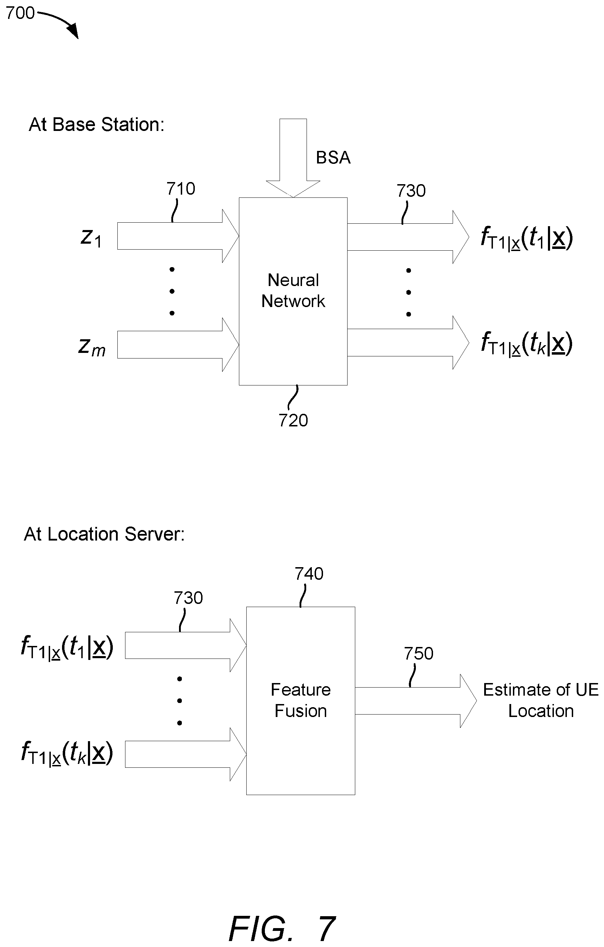

**FIG. 7** is a diagram 700 illustrating another example machine learning-based positioning formulation, according to aspects of the disclosure. As in the example of FIG. 5, on the base station side, the base station provides 'm' (one or more) inputs 710 (illustrated as "z₁" and "zₘ") to a neural network 720. Like the 'm' inputs 510, the 'm' inputs 710 may be the raw I/Q samples representing the uplink reference signal received at the base station, or may be the time-domain or frequency-domain channel estimate of the reference signal.

Unlike the neural network 520, the neural network 720 is a machine learning-based model that maps the 'm' inputs 710 (e.g., the I/Q samples or the time-domain or frequency-domain channel estimate of the reference signal) to location likelihoods of the UE. The neural network 720 can generate location likelihoods of the UE because it is provided the BSA information that is stored at the location server in the example of FIG. 5. The neural network 720 outputs likelihoods 730 of 'k' (one or more) positioning features 't' over possible UE locations 'x.' As in the example of FIG. 5, the positioning features may be positioning measurements that are based on the measured reference signal, such as an RTT, AoA, ToA, etc. The likelihoods 730 (illustrated as the function '*f*_{T1|x}') may be the mean, confidence interval, standard deviation, probability distribution, etc. of the 'k' positioning features 't' over the possible UE locations 'x' (illustrated as '*t*₁|x' and *'tₖ*|x').

The base station may transmit the likelihoods 730 to the location server (LMF 270). The location server may receive likelihoods 730 from one or more base stations involved in a positioning session with the UE. The location server may input the likelihoods 730 from each base station into a feature fusion module 740, which, based on the likelihoods 730, determines the location of the UE.

The location server transmits the parameters of the neural networks 520 and 720 (e.g., weights and biases) to the base station. The location server may customize the transmitted neural network parameters based on various base station and UE conditions, such as the base station category (e.g., device model, modem version, processing capability, etc.), base station-side channel measurements derived from different bands, the UE's geographic region (e.g., location, terrain) and indoor/outdoor condition, whether the UE is about to handover from one cell to another, and the like.

The neural networks 520 and 720 may have multiple layers (as illustrated in FIG. 4 by hidden layers 'h1,' 'h2,' and 'h3'), with the parameters of some layers being common across all UE/gNB conditions, and other layers customized to each UE/gNB condition. The location server may transmit all UE-specific neural network configurations to the base station. For each UE, and based on the prior knowledge of where that UE is roughly located (e.g., based on the serving cell identity (e.g., PCI, ECI, etc.) associated with the UE), the base station may load from memory the neural network associated with the geographic region in which the UE is located.

For example, if there are three sectors associated with the base station, with multiple co-located distributed units (e.g., gNB-DUs 228) and a central unit (e.g., gNB-CU 226), the location server may configure either a separate neural network 520/720 for each distributed, or a single neural network for the central unit.

In an aspect, the location server may send the neural network parameters to the base station together with the SRS measurement configuration. Alternatively, there may be a separate neural network parameter message. For example, a "Measurement Request" message from the location server to the base station may not include a legacy "measurement type," but rather, a "likelihood function." This would signal the base station that it is to return the outputs of the neural network 520/720, not the legacy measurements. This signaling may be over NR positioning protocol type A (NRPP), which is the signaling interface between the LMF 270 and a gNB 222.

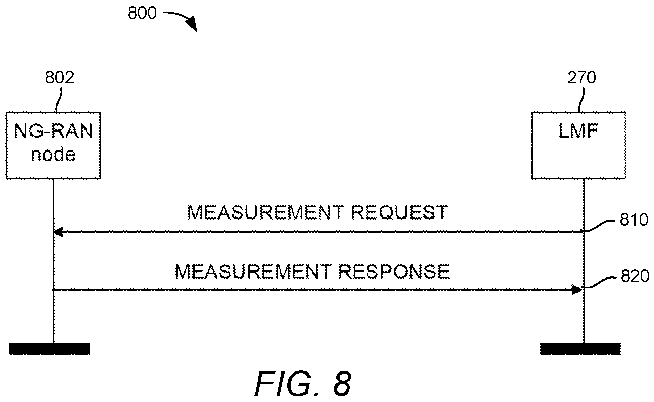

**FIG. 8** illustrates an example measurement procedure 800 between an NG-RAN node 802 and an LMF 270, according to aspects of the disclosure. The NG-RAN node 802 may be an ng-eNB 224, a gNB 222, a gNB-CU 226, a gNB-DU 228, or other node in the NG-RAN 220.

The measurement procedure 800 allows the LMF 270 to request one or more TRPs of the NG-RAN node 802 to perform and report positioning measurements. The LMF 270 initiates the measurement procedure 800 by sending, at stage 810, a MEASUREMENT REQUEST message (e.g., for NRPPa) to the NG-RAN node 802. The MEASUREMENT REQUEST message may include the following fields: "Message Type" (mandatory), "NRPPa Transaction ID" (mandatory), "LMF Measurement ID" (mandatory), "TRP Measurement Request List," "Report Characteristics" (mandatory), and "Measurement Periodicity." The "TRP Measurement Request List" fields indicates the TRP(s) from which measurements are requested and includes one or more "TRP Measurement Request Item" fields. Each "TRP Measurement Request Item" field includes the following fields: "TRP ID" (mandatory), "Search Window Information" (optional), and "Cell ID" (optional).

The MEASUREMENT REQUEST message may also include a "TRP Measurement Quantities" field, which includes a "TRP Measurement Quantities Item" field. The "TRP Measurement Quantities Item" field includes a "TRP Measurement Type" field that specifies the type of measurement the TRP is expected to perform. Currently, this field indicates that the TRP is expected to perform one of the following measurement types: gNB Tx-Rx time difference, UL-SRS-RSRP, UL-AoA, or uplink roundtrip time of arrival (UL-RTOA).

The "TRP Measurement Type" field can be extended to include a value, flag, field, etc. indicating that the TRP is expected to implement a likelihood function and report the outputs of the neural network 520/720. The LMF 270 may include the parameters for the neural network 520/720 in the MEASUREMENT REQUEST message or a separate message. The "TRP Measurement Type" field may include both a legacy identification of a measurement type and the indication that the TRP is expected to execute the likelihood function, or just the indication that the TRP is expected to execute the likelihood function.

The NG-RAN node 802 is expected to use the information included in the "TRP Measurement Request List" field to configure positioning measurements by the indicated TRP(s) (based on the TRP ID field(s)). The identified TRP(s) are expected to perform at least the measurements and/or likelihood function indicated in the "TRP Measurement Type" field. If at least one of the requested measurements and/or likelihood function has been successful for at least one of the TRPs, the NG-RAN node 802 replies, at 820, with a MEASUREMENT RESPONSE message (e.g., for NRPPa) including the "TRP Measurement Response List" field. Where the "TRP Measurement Type" field indicated that the TRP was expected to execute the likelihood function, the "TRP Measurement Response List" field may also include the outputs of the neural network 520/720.

Note that although the foregoing describes a base station implementing a neural network 520/720 to process measurements of uplink reference signals received from a UE, as will be appreciated, the techniques described herein are also applicable to a UE with a known location assisting with the positioning of another (target) UE with an unknown location (e.g., over a sidelink). In this case, the assisting UE would act as the base station in the description above. The assisting UE would communicate with the location server via LTE positioning protocol (LPP), however, instead of NRPPa. Alternatively, the assisting UE may receive the parameters for the neural network 520/720 from its serving base station, as well as a request to execute the likelihood function.

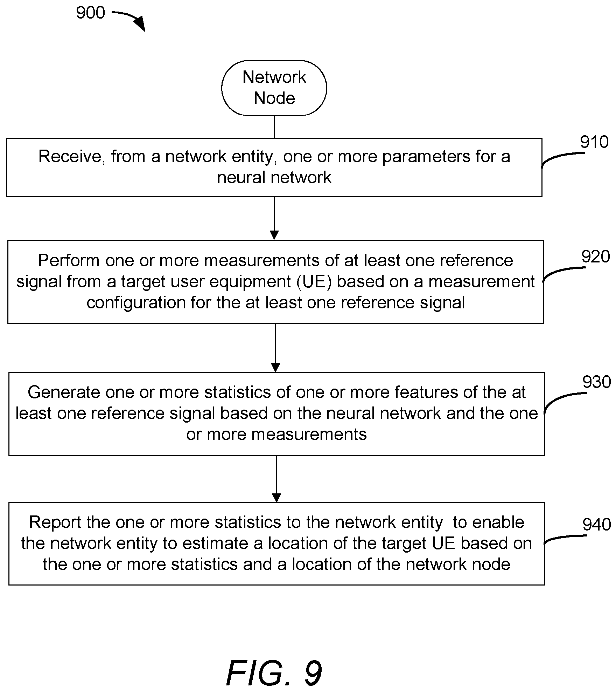

**FIG. 9** illustrates an example method 900 of positioning, according to aspects of the disclosure. In an aspect, method 900 may be performed by a network node (e.g., any of the base stations or UEs described herein).

At 910, the network node receives, from a network entity (e.g., a location server where the network node is a base station, a base station where the network node is a UE), one or more parameters for a neural network (e.g., neural network 520/720). In an aspect, where the network node is a base station, operation 910 may be performed by the one or more WWAN transceivers 350, the one or more processors 384, memory 386, and/or positioning component 388, any or all of which may be considered means for performing this operation. In an aspect, where the network node is a UE, operation 910 may be performed by the one or more WWAN transceivers 310, the one or more processors 332, memory 340, and/or positioning component 342, any or all of which may be considered means for performing this operation.

At 920, the network node performs one or more measurements of at least one reference signal (e.g., SRS) from a target UE (e.g., any of the UEs described herein) based on a measurement configuration for the at least one reference signal. In an aspect, where the network node is a base station, operation 920 may be performed by the one or more WWAN transceivers 350, the one or more processors 384, memory 386, and/or positioning component 388, any or all of which may be considered means for performing this operation. In an aspect, where the network node is a UE, operation 920 may be performed by the one or more WWAN transceivers 310, the one or more processors 332, memory 340, and/or positioning component 342, any or all of which may be considered means for performing this operation.

At 930, the network node generates one or more statistics of one or more features of the at least one reference signal based on the neural network and the one or more measurements. In an aspect, where the network node is a base station, operation 930 may be performed by the one or more WWAN transceivers 350, the one or more processors 384, memory 386, and/or positioning component 388, any or all of which may be considered means for performing this operation. In an aspect, where the network node is a UE, operation 930 may be performed by the one or more WWAN transceivers 310, the one or more processors 332, memory 340, and/or positioning component 342, any or all of which may be considered means for performing this operation.

At 940, the network node reports the one or more statistics to the network entity to enable the network entity to estimate a location of the target UE based on the one or more statistics and a location of the network node. In an aspect, where the network node is a base station, operation 940 may be performed by the one or more WWAN transceivers 350, the one or more processors 384, memory 386, and/or positioning component 388, any or all of which may be considered means for performing this operation. In an aspect, where the network node is a UE, operation 940 may be performed by the one or more WWAN transceivers 310, the one or more processors 332, memory 340, and/or positioning component 342, any or all of which may be considered means for performing this operation.

As will be appreciated, the techniques of the present disclosure, including method 900, provide the technical advantage of enabling the use of a machine learning-based model to map a received reference signal to a location estimate. The techniques also allow the location server to finely tailor the features that a base station is configured to report, based on the local conditions, which allows for more accurate location estimation. The techniques can also model measurement reliability and enable the location server to learn the gNB time synchronization error, also leading to more accurate positioning.

In the detailed description above it can be seen that different features are grouped together in examples. This manner of disclosure should not be understood as an intention that the example clauses have more features than are explicitly mentioned in each clause. Rather, the various aspects of the disclosure may include fewer than all features of an individual example clause disclosed. Therefore, the following clauses should hereby be deemed to be incorporated in the description, wherein each clause by itself can stand as a separate example. Although each dependent clause can refer in the clauses to a specific combination with one of the other clauses, the aspect(s) of that dependent clause are not limited to the specific combination. It will be appreciated that other example clauses can also include a combination of the dependent clause aspect(s) with the subject matter of any other dependent clause or independent clause or a combination of any feature with other dependent and independent clauses. The various aspects disclosed herein expressly include these combinations, unless it is explicitly expressed or can be readily inferred that a specific combination is not intended (e.g., contradictory aspects, such as defining an element as both an insulator and a conductor). Furthermore, it is also intended that aspects of a clause can be included in any other independent clause, even if the clause is not directly dependent on the independent clause.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an ASIC, a field-programable gate array (FPGA), or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, for example, a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated. The intended limitations are defined by the appended claims.

## Claims

1. A method (900) of positioning performed by a network node (802, 304), comprising:
receiving (910), from a network entity (270), one or more parameters for a neural network (520);
performing (920) one or more measurements of at least one reference signal from a target user equipment, UE (204) based on a measurement configuration for the at least one reference signal;
generating (930) one or more statistics (530) of one or more features of the at least one reference signal based on the neural network and the one or more measurements; and
reporting (940) the one or more statistics (530) to the network entity to enable the network entity to estimate a location of the target UE (204) based on the one or more statistics and a location of the network node.

2. The method (900) of claim 1, wherein the one or more parameters comprise one or more weights and one or more biases of the neural network (520).

3. The method (900) of claim 1, further comprising:
receiving, from the network entity, at least one message (810) containing the measurement configuration, wherein the one or more parameters are received from the network entity in the at least one message containing the measurement configuration.

4. The method (900) of claim 1, wherein the one or more parameters are received from the network entity separately from the measurement configuration.

5. The method (900) of claim 1, wherein the one or more parameters are customized for the network node (802), the target UE (204), or both based on one or more conditions.

6. The method (900) of claim 5, wherein the one or more conditions comprise:
a device model of the network node (802),
a modem version of the network node (802),
processing capability of the network node (802),
network node channel measurements derived on different frequency bands,
a type of region in which the target UE (204) is located,
an indoor or outdoor condition of the target UE (204), or
any combination thereof.

7. The method (900) of claim 5, wherein:
the neural network (520) comprises a plurality of layers,
parameters of one or more layers of the plurality of layers are common across all of the one or more conditions, and
for each condition of the one or more conditions, at least one remaining layer of the plurality of layers is specific to the condition.

8. The method (900) of claim 1, wherein the one or more measurements comprise:
I/Q samples of the at least one reference signal,
a frequency-domain channel estimate of the at least one reference signal, or
a time-domain channel estimate of the at least one reference signal, wherein the time-domain channel estimate comprises a power-delay-angle profile of the at least one reference signal.

9. The method (900) of claim 1, wherein the one or more features comprise:
a round-trip-time, RTT, measurement,
a time difference of arrival, TDOA, measurement,
a time of arrival, ToA, measurement,
an angle of arrival, AoA, measurement,
a zenith of arrival, ZoA, measurement, or
any combination thereof.

10. The method (900) of claim 1, wherein the one or more statistics (530) comprise:
a mean of the one or more features,
a confidence interval of the one or more features,
a standard deviation of the one or more features, or
any combination thereof.

11. The method (900) of claim 1, wherein the one or more statistics (530) comprise:
a probability distribution of each of the one or more features,
a joint probability distribution of the one or more features, or
any combination thereof, wherein:
the probability distribution of each of the one or more features comprises a Gaussian function, and
the one or more statistics further comprise a mean, a covariance, at least one weight, or any combination thereof of each Gaussian function, or wherein the joint probability distribution comprises a multi-dimensional mixture of Gaussian functions of the one or more features.

12. The method (900) of claim 1, wherein the one or more statistics (530) comprise one or more conditional statistics that are based on the location of the target UE (204),, wherein:
the location of the target UE (204) is estimated from the one or more statistics, or
the location of the target UE (204) is determined from a cell identity associated with the target UE, and/or, wherein the neural network (further takes as input base station almanac, BSA, information.

13. The method (900) of claim 1, wherein:
the neural network (520) is specific to the target UE (204), and
the neural network (520) is associated with the location of the target UE (204),
wherein:
the location of the target UE (204) corresponds to a distributed unit of the network node (802) to which the target UE is connected, or
the location of the target UE (204) corresponds to a central unit of the network node to which the target UE is connected.

14. The method (900) of claim 1, wherein:
the network node (802) is a base station, and
the network entity (270) is a location server, or
the network node (802) is a UE in communication with the target UE (204) over a sidelink, and
the network entity (270) is a serving base station of the UE.

15. A network node (802, 304), comprising:
a memory (396);
at least one transceiver (390); and
at least one processor (394) communicatively coupled to the memory and the at least one transceiver, the at least one processor configured to carry out the steps of any of claims 1 to 14.

## Patentansprüche

1. Ein Verfahren (900) zur Positionsbestimmung, das durch einen Netzwerkknoten (802, 304) durchgeführt wird, das Folgendes aufweist:
Empfangen (910), von einer Netzwerkeinheit (270), von einem oder mehreren Parametern für ein neuronales Netzwerk (520);
Durchführen (920) von einer oder mehreren Messungen von wenigstens einem Referenzsignal von einer Zielnutzereinrichtung bzw. Ziel-UE (UE = user equipment) (204) basierend auf einer Messungskonfiguration für das wenigstens eine Referenzsignal;
Generieren (930) von einer oder mehreren Statistiken (530) von einem oder mehreren Merkmalen des wenigstens einen Referenzsignals basierend auf dem neuronalen Netzwerk und der einen oder den mehreren Messungen; und
Berichten (940) der einen oder mehreren Statistiken (530) an die Netzwerkeinheit, um der Netzwerkeinheit zu ermöglichen einen Standort der Ziel-UE (204) basierend auf der einen oder den mehreren Statistiken und einem Standort des Netzwerkknotens zu schätzen.

2. Verfahren (900) nach Anspruch 1, wobei der eine oder die mehreren Parameter eine oder mehrere Gewichtungen und eine oder mehrere Bias des neuronalen Netzwerks (520) aufweist.

3. Verfahren (900) nach Anspruch 1, das weiter Folgendes aufweist:
Empfangen, von der Netzwerkeinheit, von wenigstens einer Nachricht (810), die die Messungskonfiguration enthält, wobei der eine oder die mehreren Parameter von der Netzwerkeinheit in der wenigstens einen Nachricht empfangen werden, die die Messungskonfiguration enthält.

4. Verfahren (900) nach Anspruch 1, wobei der eine oder die mehreren Parameter von der Netzwerkeinheit separat von der Messungskonfiguration empfangen werden.

5. Verfahren (900) nach Anspruch 1, wobei der eine oder die mehreren Parameter für den Netzwerkknoten (802), die Ziel-UE (204) oder beides basierend auf einer oder mehreren Bedingungen angepasst werden.

6. Verfahren (900) nach Anspruch 5, wobei die eine und die mehreren Konditionen Folgendes aufweisen:
ein Einrichtungsmodell des Netzwerkknotens (802),
eine Modemversion des Netzwerkknotens (802),
eine Verarbeitungsfähigkeit des Netzwerkknotens (802),
Netzwerkknotenkanalmessungen, die auf unterschiedlichen Frequenzbändern hergeleitet werden,
einen Typ einer Region, in der die Ziel-UE (204) angeordnet ist,
eine Indoor- oder Outdoor-Bedingung der Ziel-UE (204) oder
irgendeine Kombination davon.

7. Verfahren (900) nach Anspruch 5, wobei:
das neuronale Netzwerk (520) eine Vielzahl von Schichten aufweist,
Parameter von einer oder mehreren Schichten der Vielzahl von Schichten allen der einen oder mehrere Bedingungen gemeinsam sind, und
für jede Bedingung der einen oder mehreren Bedingungen, wenigstens eine verbleibende Schicht der Vielzahl von Schichten für die Bedingung spezifisch ist.

8. Verfahren (900) nach Anspruch 1, wobei die eine oder die mehreren Messungen Folgendes aufweisen:
I/Q-Samples bzw. -Abtastungen des wenigstens einen Referenzsignals,
eine Frequenzbereichskanalschätzung des wenigstens einen Referenzsignals, oder
eine Zeitbereichskanalschätzung des wenigstens einen Referenzsignals, wobei die Zeitbereichskanalschätzung ein Leistungsverzögerungswinkelprofil des wenigstens einen Referenzsignals aufweist.

9. Verfahren (900) nach Anspruch 1, wobei das eine oder die mehrere Merkmale Folgendes aufweisen:
eine Umlaufzeit- bzw. RTT-Messung (RTT = round-trip-time),
eine Messung einer Differenz einer Ankunftszeit bzw. TDOA-Messung (TDOA = time difference of arrival),
eine Ankunftszeit- bzw. ToA-Messung (ToA = time of arrival),
eine Ankunftswinkelmessung bzw. AoA-Messung (AoA = angle of arrival),
einen Zenith-Ankunfts-Messung bzw. ZoA-Messung (ZoA = zenith of arrival), oder
irgendeine Kombination davon.

10. Verfahren (900) nach Anspruch 1, wobei die eine oder die mehreren Statistiken (530) Folgendes aufweisen:
einen Mittelwert des einen oder der mehrere Merkmale,
ein Konfidenzintervall des einen oder der mehreren Merkmale,
eine Standardabweichung des einen oder der mehreren Merkmale, oder irgendeine Kombination davon.

11. Verfahren (900) nach Anspruch 1, wobei die eine oder die mehreren Statistiken (530) Folgendes aufweisen:
eine Wahrscheinlichkeitsverteilung von jedem des einen oder der mehreren Merkmale,
eine gemeinsame Wahrscheinlichkeitsverteilung des einen oder der mehreren Merkmale, oder
irgendeine Kombination davon, wobei:
die Wahrscheinlichkeitsfunktion von jedem des einen oder der mehreren Merkmale eine Gauß-Funktion aufweist, und
die eine oder die mehreren Statistiken weiter einen Mittelwert, eine Kovarianz, wenigstens eine Gewichtung oder irgendeine Kombination davon von jeder Gauß-Funktion aufweisen, oder wobei die gemeinsame Wahrscheinlichkeitsverteilung eine multidimensionale Mischung von Gauß-Funktionen des einen oder der mehreren Merkmale aufweist.

12. Verfahren (900) nach Anspruch 1, wobei die eine oder die mehreren Statistiken (530) eine oder mehrere konditionale Statistiken aufweisen, die auf dem Standort der Ziel-UE (204) basieren, wobei:
der Standort der Ziel-UE (204) aus der einen oder den mehreren Statistiken geschätzt wird, oder
der Standort der Ziel-UE (204) aus einer Zellidentität bestimmt wird, die mit der Ziel-UE assoziiert ist, und/oder wobei das neuronale Netzwerk weiter Basisstationsalmanach- bzw. BSA-Information (BSA = base station almanac) als Eingabe nimmt.

13. Verfahren (900) nach Anspruch 1, wobei:
das neuronale Netzwerk (520) für die Ziel-UE (204) spezifisch ist, und
das neuronale Netzwerk (520) mit dem Standort der Ziel-UE (204) assoziiert ist,
wobei:
der Standort der Ziel-UE (204) einer verteilten Einheit des Netzwerkknotens (802) entspricht, mit dem die Ziel-UE verbunden ist, oder
der Standort der Ziel-UE (204) einer zentralen Einheit des Netzwerkknotens entspricht, mit dem die Ziel-UE verbunden ist.

14. Verfahren (900) nach Anspruch 1, wobei:
der Netzwerkknoten (802) eine Basisstation ist, und
die Netzwerkeinheit (270) ein Standortserver ist, oder
der Netzwerkknoten (802) eine UE in Kommunikation mit der Ziel-UE (204) über einen Sidelink ist, und
die Netzwerkeinheit (270) eine Versorgung der Basisstation der UE ist.

15. Ein Netzwerkknoten (802, 304), der Folgendes aufweist:
einen Speicher (396);
wenigstens einen Transceiver (390); und
wenigstens einen Prozessor (394), der kommunikativ an den Speicher und den wenigstens einen Transceiver gekoppelt ist, wobei der wenigstens eine Prozessor konfiguriert, ist die Schritte nach einem der Ansprüche 1 bis 14 durchzuführen.

## Revendications

1. Procédé (900) de positionnement mis en œuvre par un nœud de réseau (802, 304), comprenant :
la réception (910), à partir d'une entité de réseau (270), d'un ou de plusieurs paramètres pour un réseau neuronal (520) ;
l'exécution (920) d'une ou de plusieurs mesures d'au moins un signal de référence provenant d'un équipement utilisateur, UE, cible (204) sur la base d'une configuration de mesure pour l'au moins un signal de référence ;
la génération (930) d'une ou de plusieurs statistiques (530) d'une ou de plusieurs caractéristiques de l'au moins un signal de référence sur la base du réseau neuronal et des une ou plusieurs mesures ; et
la transmission (940) des une ou plusieurs statistiques (530) à l'entité de réseau pour permettre à l'entité de réseau d'estimer l'emplacement de l'UE cible (204) sur la base des une ou plusieurs statistiques et de l'emplacement du nœud de réseau.

2. Procédé (900) selon la revendication 1, dans lequel les un ou plusieurs paramètres comprennent un ou plusieurs poids et un ou plusieurs biais du réseau neuronal (520).

3. Procédé (900) selon la revendication 1, comprenant en outre :
la réception, en provenance de l'entité de réseau, d'au moins un message (810) contenant la configuration de mesure, dans lequel les un ou plusieurs paramètres sont reçus en provenance de l'entité de réseau dans l'au moins un message contenant la configuration de mesure.

4. Procédé (900) selon la revendication 1, dans lequel les un ou plusieurs paramètres sont reçus en provenance de l'entité de réseau séparément de la configuration de mesure.

5. Procédé (900) selon la revendication 1, dans lequel les un ou plusieurs paramètres sont personnalisés pour le nœud de réseau (802), l'UE cible (204) ou les deux en fonction d'une ou de plusieurs conditions.

6. Procédé (900) selon la revendication 5, dans lequel les une ou plusieurs conditions comprennent :
un modèle de dispositif du nœud de réseau (802),
une version modem du nœud de réseau (802),
la capacité de traitement du nœud de réseau (802),
des mesures de canal du nœud de réseau dérivées sur différentes bandes de fréquences,
un type de région dans laquelle se trouve l'UE cible (204),
une condition intérieure ou extérieure de l'UE cible (204), ou
une quelconque combinaison de celles-ci.

7. Procédé (900) selon la revendication 5, dans lequel :
le réseau neuronal (520) comprend une pluralité de couches,
les paramètres d'une ou de plusieurs couches de la pluralité de couches sont communs à toutes les une ou plusieurs conditions, et
pour chaque condition parmi les une ou plusieurs conditions, au moins une couche restante de la pluralité de couches est spécifique à la condition.

8. Procédé (900) selon la revendication 1, dans lequel les une ou plusieurs mesures comprennent :
des échantillons I/Q de l'au moins un signal de référence,
une estimation de canal dans le domaine fréquentiel de l'au moins un signal de référence, ou
une estimation de canal dans le domaine temporel de l'au moins un signal de référence, dans lequel l'estimation du canal dans le domaine temporel comprend un profil puissance-retard-angle de l'au moins un signal de référence.

9. Procédé (900) selon la revendication 1, dans lequel les une ou plusieurs caractéristiques comprennent :
une mesure du temps d'aller-retour, RTT,
une mesure de la différence de temps d'arrivée, TDOA,
une mesure du temps d'arrivée, ToA,
une mesure de l'angle d'arrivée, AoA,
une mesure du zénith d'arrivée, ZoA, ou
une quelconque combinaison de celles-ci.

10. Procédé (900) selon la revendication 1, dans lequel les une ou plusieurs statistiques (530) comprennent :
une moyenne des une ou plusieurs caractéristiques,
un intervalle de confiance des une ou plusieurs caractéristiques,
un écart type des une ou plusieurs caractéristiques, ou
une quelconque combinaison de ceux-ci.

11. Procédé (900) selon la revendication 1, dans lequel les une ou plusieurs statistiques (530) comprennent :
une distribution de probabilité de chacune des une ou plusieurs caractéristiques,
une distribution de probabilité conjointe des une ou plusieurs caractéristiques, ou
une quelconque combinaison de celles-ci, dans lequel :
la distribution de probabilité de chacune des une ou plusieurs caractéristiques comprend une fonction gaussienne, et
les une ou plusieurs statistiques comprennent en outre une moyenne, une covariance, au moins un poids, ou une quelconque combinaison de ceux-ci de chaque fonction gaussienne, ou dans lequel la distribution de probabilité conjointe comprend un mélange multidimensionnel de fonctions gaussiennes des une ou plusieurs caractéristiques.

12. Procédé (900) selon la revendication 1, dans lequel les une ou plusieurs statistiques (530) comprennent une ou plusieurs statistiques conditionnelles qui sont basées sur l'emplacement de l'UE cible (204), dans lequel :
l'emplacement de l'UE cible (204) est estimé à partir des une ou plusieurs statistiques, ou
l'emplacement de l'UE cible (204) est déterminé à partir d'une identité de cellule associée à l'UE cible, et/ou dans lequel le réseau neuronal prend en outre en entrée des informations de l'almanach de la station de base, BSA.

13. Procédé (900) selon la revendication 1, dans lequel :
le réseau neuronal (520) est spécifique à l'UE cible (204), et
le réseau neuronal (520) est associé à l'emplacement de l'UE cible (204),
dans lequel :
l'emplacement de l'UE cible (204) correspond à une unité distribuée du nœud de réseau (802) auquel l'UE cible est connecté, ou
l'emplacement de l'UE cible (204) correspond à une unité centrale du nœud de réseau auquel l'UE cible est connecté.

14. Procédé (900) selon la revendication 1, dans lequel :
le nœud de réseau (802) est une station de base, et
l'entité de réseau (270) est un serveur de localisation, ou
le nœud de réseau (802) est un UE en communication avec l'UE cible (804) par l'intermédiaire d'une liaison latérale, et
l'entité de réseau (270) est une station de base de desserte de l'UE.

15. Nœud de réseau (802,304), comprenant :
une mémoire (396) ;
au moins un émetteur-récepteur (390) ; et
au moins un processeur (394) relié en communication à la mémoire et à l'au moins un émetteur-récepteur, l'au moins un processeur étant configuré pour mettre en œuvre les étapes selon l'une quelconque des revendications 1 à 14.
